# EUROPEAN PATENT APPLICATION

(11) **EP 4 674 815 A1**
(43) Date of publication of application: **07.01.2026**
(21) Application number: 24185701.0
(22) Date of filing: 01.07.2024
(51) Int. Cl.: C01G 53/04

(54) **METHOD OF PROCESSING A METAL-BEARING M' -HYDROXIDE OR -OXYHYDROXIDE PARTICULATE SLURRY**

(71) Applicant: Umicore Battery Materials Finland Oy, 67900 Kokkola (FI)
(72) Inventor: HASSINEN, Ville, 67900 Kokkola (FI); VEHKAMÄKI, Ville, 67900 Kokkola (FI)
(74) Representative: Umicore RDI Patent Department

(57) **Abstract**

It is disclosed a method for processing a metal-bearing M'-hydroxide or -oxyhydroxide particulate slurry, having a median particle size D50 of equal to or less than 3 µm, the method comprising the steps of:
(a) combining the slurry and an aqueous solution (A) containing water-soluble salts of metal M_{A} such that Rₐ≤10 to obtain a first mixture and providing the NH3_{(aq)} concentration of the first mixture being at least 10 g/l, wherein Rₐ is a ratio of the mass of the solids content of the slurry to the mass of the metals M_{A} of the solution (A); and
(b) combining the first mixture with alkali metal hydroxide until a second mixture having a pH value of at least 11.5, determined at 20 °C, is obtained,

wherein the M'=Ni_{1-x-y-z}MnₓCo_{y}Q_{z} with 0≤x≤0.85, 0≤y≤0.35, 0≤z<0.1 and 0.25≤1-x-y-z≤1, and
wherein the M_{A}=Ni_{1-xa-ya-za}MnₓₐCo_{ya}Q_{za} with 0≤xa≤0.85, 0≤ya≤0.35, 0≤za<0.1 and 0.25≤1-xa-ya-za≤1.

## Description

### TECHNICAL FIELD

In general, the present invention relates to a method of processing a metal-bearing M'-hydroxide or -oxyhydroxide particulate slurry. In particular, however not exclusively, the present invention relates processing a metal-bearing M'-hydroxide or -oxyhydroxide particulate slurry, having a median particle size D50 of equal to or less than 3 µm.

### BACKGROUND

Cathode active materials of secondary batteries are generally prepared from precursor materials that are transition metal hydroxides, oxides or oxyhydroxides, which in turn are typically prepared in co-precipitation processes that involve combining a transition metal salt solution and an alkali solution with the possible presence of a complexing agent.

In the co-precipitation processes, off-spec precursor material that does not meet the defined quality/structural specifications is occasionally obtained, at least in continuous-mode precipitations, before the reaction reaches its defined steady state. For example, in continuous mode preparations where the target D50 particle size is 1-2 to 3-4 µm and the resulting slurry is to be used as a seed slurry for further growth precipitation processes, off-spec material slurry is produced in the process start-up phase. Such an off-spec material slurry with a high fines content is difficult to filter to separate the metal-bearing particles due to clogging of the filter media and/or filter cake. Therefore, there is a challenge in the post-processing/treatment of such off-spec material slurries to recover the metals contained therein and to avoid discharging the metals with the other slurry components.

In view of the above, there is a need for improvement in the processing of these off-spec material slurries.

### SUMMARY OF THE INVENTION

An object of the present invention is to provide a method of processing said off-spec precursor material slurry which results in improved solid-liquid separation of said off-spec material slurry.

The object is achieved by providing a method of processing a metal-bearing M'-hydroxide or -oxyhydroxide particulate slurry, having a median particle size D50 of equal to or less than 3 µm, the method comprising the steps of:
(a) combining the slurry and an aqueous solution (A) containing water soluble salts of metal M_{A} such that Rₐ≤10 to obtain a first mixture and providing the NH3_{(aq)} concentration of the first mixture being at least 10 g/l, wherein Rₐ is a ratio of the mass of the solids content of the slurry to the mass of the metals M_{A} of the solution (A); and
(b) combining the first mixture with alkali metal hydroxide until a second mixture having a pH value of at least 11.5, determined at 20 °C, is obtained,

wherein the M'=Ni_{1-x-y-z}MnₓCo_{y}A_{z} with 0≤x≤0.85, 0≤y≤0.35, 0≤z<0.1 and 0.25≤1-x-y-z≤1, and
wherein the M_{A}=Ni_{1-xa-ya-za}MnₓₐCo_{ya}A_{za} with 0≤xa≤0.85, 0≤ya≤0.35, 0≤za<0.1 and 0.25≤1-xa-ya-za≤1.

It is indeed observed that the method provides a fast and industrially feasible way to increase the particle size of the slurry provided as a raw material (i.e., off-spec slurry). As showed in the Examples below not only the D50 of the particles of the slurry increases but also its fines, as shown by the D10 size values, increases as well. This means that the second mixture (slurry), obtained from step (b) is better applicable to efficient solid-liquid separating, e.g., by press filtering, compared to the slurry provided in step (a) as a raw material.

Various embodiments according to the present invention are disclosed in the claims as well as in the description. The embodiments and examples recited in the claims and in the description are mutually freely combinable unless otherwise explicitly stated. Throughout the entire disclosure, if any numerical ranges are provided, the ranges also include the endpoint values unless otherwise explicitly stated.

### BRIEF DESCRIPTION OF THE FIGURES

By means of further guidance, figures are included to better appreciate the teaching of the present invention, wherein:

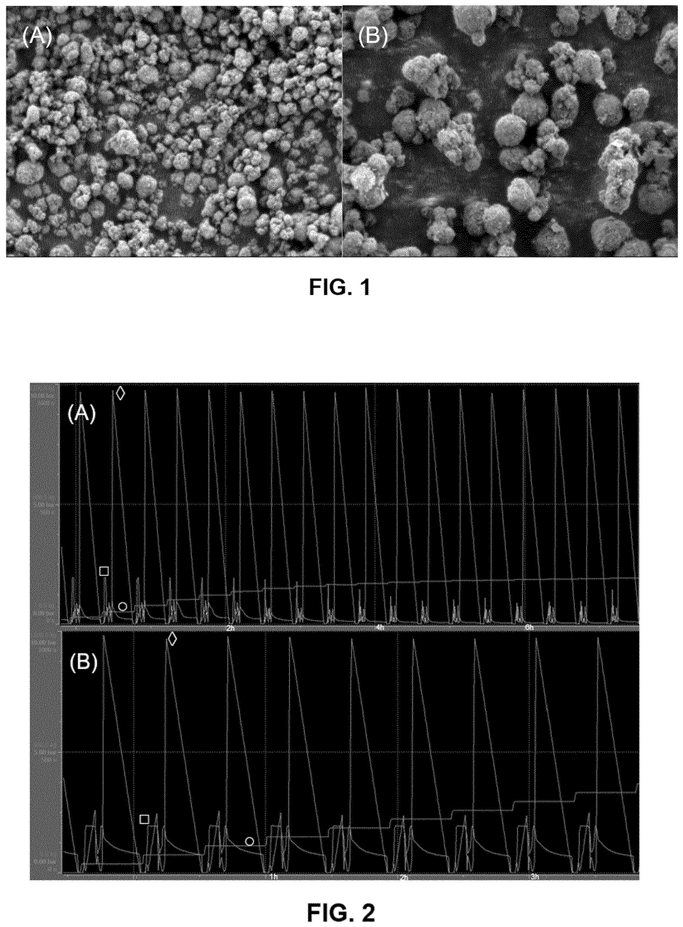

Figure 1(A) shows a SEM image of the nickel hydroxide-containing aqueous slurry used as the raw material in Example 5, and Figure 1(B) shows a SEM image of the second mixture obtained from Example 5.
Figure 2(A) shows the press filtration efficiency for the nickel hydroxide-containing aqueous slurry used as the raw material in Example 5, and Figure 2(B) shows the press filtration efficiency for the second mixture obtained from Example 5, by means of the graph of the filtration step (in units of s) denoted by ◇, the graph of the filtration pressure applied (in units of bar) denoted by □, and the graph of the weight of the recovered filter cake (in units of kg) denoted by o, respectively.

### DETAILED DESCRIPTION OF THE INVENTION

In the following detailed description, preferred embodiments are described in detail to enable the invention to be practiced. Although the invention is described with reference to these specific preferred embodiments, it will be understood that the invention is not limited to these preferred embodiments. To the contrary, the invention includes numerous alternatives, modifications, and equivalents, as will become apparent from consideration of the following detailed description. Preferred embodiments of the distinct aspects of the invention can be combined with one another unless it is specifically mentioned otherwise.

The term "comprising", as used herein and in the claims, should not be interpreted as being restricted to the means listed thereafter; it does not exclude other elements or steps. It needs to be interpreted as specifying the presence of the stated features, integers, steps, or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present invention, the only relevant components of the composition are A and B. Accordingly, the terms "comprising" and "including" encompass the more restrictive terms "consisting essentially of" and "consisting of".

As used herein, the term "and/or," when used in a list of two or more items, means that any one of the listed items can be employed by itself, or any combination of two or more of the listed items, can be employed. For example, if a composition is described as containing components X, Y, and/or Z, the composition can contain X alone; Y alone; Z alone; X and Y in combination; X and Z in combination; Y and Z in combination; or X, Y, and Z in combination.

In the present disclosure all given pH values refer to values which are measured at a temperature of 20 °C, unless otherwise stated.

In a first aspect, the present invention relates to a method of processing a metal-bearing M'-hydroxide or -oxyhydroxide particulate slurry, having a median particle size D50 of equal to or less than 3 µm, the method comprising the steps of:
(a) combining the slurry and an aqueous solution (A) containing water soluble salts of metal M_{A} such that Rₐ≤10 to obtain a first mixture and providing the NH3_{(aq)} concentration of the first mixture being at least 10 g/l, wherein Rₐ is a ratio of the mass of the solids content of the slurry to the mass of the metals M_{A} of the solution (A); and
(b) the first mixture with alkali metal hydroxide until a second mixture having a pH value of at least 11.5, determined at 20 °C, is obtained,

wherein the M'=Ni_{1-x-y-z}MnₓCo_{y}A_{z} with 0≤x≤0.85, 0≤y≤0.35, 0≤z<0.1 and 0.25≤1-x-y-z≤1, and
wherein the M_{A}=Ni_{1-xa-ya-za}MnₓₐCO_{ya}A_{za} with 0≤xa≤0.85, 0≤ya≤0.35, 0≤za<0.1 and 0.25≤1-xa-ya-za≤1.

Accordingly, the method comprises at least two steps, hereinafter also referred to as step (a) and step (b), respectively. The method may include further optional steps.

In an embodiment, in step (a) Rₐ≤7.

In an embodiment, in step (a) Rₐ≥3 or Rₐ≥4.

When the Rₐ value is higher than 10 or, in some applications, higher than 7, there is a risk that there will be less metal M_{A} in the first mixture than is required in step (b) to provide sufficient growth and agglomeration of the slurry particles to allow an efficient solid-liquid separation for the mixture/slurry obtained from step (b).

When the Rₐ value is smaller than 4 or, in some applications, smaller than 3, there is a risk that there will be more metal M_{A} in the first mixture than is required in step (b) resulting in higher growth and agglomeration of the slurry particles than required to allow efficient solid-liquid separation for the mixture/slurry obtained from step (b).

In an embodiment, particle size D50 of the slurry provided in step (a) as a starting material to obtain the first mixture is equal to or less than 3.5 µm.

In an embodiment, particle size D50 of the slurry provided in step (a) as a starting material to obtain the first mixture is equal to or less than 2.5 µm.

The average particle diameter may be determined, for example, by light scattering or laser diffraction or electroacoustic spectroscopy. The particles are composed of primary particles, in particular, they are agglomerates of primary particles, and the particle diameter/size in this disclosure refers to the secondary particle diameter/size.

In an embodiment, particle size D10 of the slurry provided in step (a) as a starting material (i.e., raw material) to obtain the first mixture is equal to or less than 1.0 µm. In an embodiment, particle size D10 of the slurry provided in step (a) as a starting material is equal to or less than 0.9 or 0.8 µm.

In this disclosure D10, D50 and D90 are defined as the average particle diameter at 10%, 50% and 90% of the cumulative volume % distribution. The span is defined as (D90-D10)/D50.

The metal-bearing M'-hydroxide or -oxyhydroxide particulate slurry provided in step (a) can be alkaline. In the cases where the slurry is obtained from a precipitation process, such as a continuous-mode process, without being processed with acids or bases before providing it to step a), its pH is typically higher than 12. In step (a), once the slurry is combined with the aqueous solution (A) containing water-soluble salts, such as sulfate salts, of metal MA, the pH of the first solution obtained is therefore lower than the pH of the slurry before combining.

The metal-bearing M'-hydroxide or -oxyhydroxide particulate slurry comprises at least nickel and optionally at least one metal selected from Co and Mn, and at least one further metal selected from Ba, Ca, Ce, Cr, La, Mg, Mo, Nb, Sr, Ti, Y, V, W, Zn, and Al.

The metal M_{A} in the aqueous solution (A) comprises at least nickel and optionally at least one metal selected from Co and Mn, and at least one further metal selected from Ba, Ca, Ce, Cr, La, Mg, Mo, Nb, Sr, Ti, Y, V, W, Zn, and Al.

In an embodiment, 1-xa-ya-za=1. In other words, the solution (A) in this particular embodiment consists of water-soluble salts of nickel.

In an embodiment, 1-x-y-z= 1. In other words, the slurry, provided in step (a) as a starting material, in this particular embodiment consists of water-soluble salts of nickel.

Water-soluble salts of nickel and cobalt and manganese may preferably be the respective water-soluble salts of Ni²⁺ and Co²⁺ and Mn²⁺. The water-soluble salts of the metals can be nitrates and sulfates, for instance. In one embodiment, the aqueous solution (A) contains sulfate salts of metal M_{A}.

The concentration of the solution (A) containing water-soluble salts of metal M_{A} is preferably 100 g/l or more and 400 g/l or less. When the concentration of the solution (A) is less than 100 g/l, the amount of precipitated (crystallized) material per batch decreases and thus the productivity decreases in some use cases. On the other hand, when the concentrations of the first and second raw material aqueous solutions exceed 400 g/l, the concentrations exceed the saturation concentrations at room temperature, and it is thus concerned that crystals of a metal compound will be redeposited to clog the supply lines and the like.

The term "concentration of NH3(aq)" or the like as used herein means the concentration of ammonia in an aqueous solution or slurry. As appreciated by the skilled person the NH3(aq) concentration can be measured for example by using a commercially available titrator such as Metrohm 848 Titrino Plus.

In an embodiment, step (a) comprises combining a source of ammonia (NH₃) with the metal-bearing M'-hydroxide or -oxyhydroxide particulate slurry and the aqueous solution (A) to provide the NH3_{(aq)} concentration of the first mixture thus obtained being at least 10 g/l.

The method for supplying the solution (A) and the particulate slurry is not particularly limited. For example, they may be supplied by a pump capable of controlling the flow rate such as a metering pump to obtain a desired ratio of the mass of the solids content of the slurry to the mass of the metals M_{A} of the solution (A), Rₐ, while being sufficiently stirred.

In the embodiments wherein the source of ammonia is combined in step (a), the source of ammonia is preferably in solution form, such as ammonia water, and its concentration is preferably in the range of from 10 to 30 wt.%, for instance. The method for supplying the source of ammonia is not particularly limited. For example, the source of ammonia may be supplied by a pump capable of controlling the flow rate such as a metering pump while being sufficiently stirred.

When the NH_{3(aq)} concentration of the first mixture is at least 10 g/l, in step (b) the precipitation reaction (crystallization) between the solution-form metals and existing hydroxide favors the growth of the existing particles and/or the nucleation of new, separate particles to the slurry is suppressed.

In an embodiment, the NH₃(aq) concentration of the first mixture is at least 12 g/l or at least 13 g/l.

In an embodiment, step (b) includes providing a second mixture by combining the first mixture from step (a), or at least a part of it, and alkali metal hydroxide, by supplying and mixing the alkali metal hydroxide to the first mixture or at least a part of it until a pH value in the range of from 11.5 to 12 is obtained.

In an embodiment, the alkali metal hydroxide is combined with the first mixture until the molar amount of the combined alkali metal hydroxide is in excess of the molar amount of the metal M_{A} of the solution (A) combined in step (a), such as 2:1 or more.

When the pH of the second mixture in step (b) is increased by adding the alkali metal hydroxide to at least 11.5, and additionally or alternatively, the alkali metal hydroxide is combined with the first mixture until the molar amount of the combined alkali metal hydroxide is in excess of molar amounts to the molar amount of the metal MA of the solution (A) combined in step (a), such as 2:1 or more, the amount of dissolved metals remaining in the second obtained mixture is suppressed.

In an embodiment, the pH of the obtained second mixture is equal to or less than 12.5. When the pH of the obtained second mixture is equal to or less than 12.5, the phenomena that negatively influence the desired result, i.e. an increase of the particle sizes compared to the particulate slurry provided in step (a), e.g. due to a possible back dissolution of metals and/or nucleation of new particles, which occur essentially in the pH conditions higher than 12.5, can be suppressed.

In an embodiment, the alkali metal hydroxide being provided in step (b) is provided as a solution containing alkali metal hydroxide. The alkali metal hydroxide may be, for example, sodium hydroxide or potassium hydroxide. In one embodiment, the alkali metal hydroxide provided in step (b) is sodium hydroxide.

The alkali metal hydroxide provided in step (b) can be in liquid form or solid form or both. In one embodiment, the alkali metal is provided as an aqueous solution. In this case, the concentration of the aqueous solution of alkali metal hydroxide is preferably 20 wt.% to 50 wt.%, more preferably 20 wt.% to 30 wt.%. By controlling the concentration to such a range, it is possible to prevent the pH from increasing locally at the point of addition while suppressing the amount of solvent, typically water, supplied to the reactor. The method of supplying the aqueous alkaline solution is not particularly limited. For example, the reaction aqueous solution may be supplied by a pump capable of controlling the flow rate, such as a metering pump, while being sufficiently stirred to suppress the formation of high hydroxide ion concentration gradients.

Steps (a) and (b) can be done in a stirred tank reactor, for example. The stirred tank reactor is a reaction vessel equipped with a stirring means. In an embodiment the method is performed in a batch-wise operated stirred tank reactor.

In step (b) the alkali metal hydroxide is added and mixed with the first mixture to increase the pH to at least 11.5. The addition rate of the alkali metal hydroxide, i.e., the flow rate in the case of solution form alkali metal hydroxide, may be adjusted to such that the duration of step (b) is in the range of from 30 minutes to 5 hours, preferably in the range from 1 to 3 hours, more preferred in the range of 1 to 2 hours. When the duration is in this range, it is ensuring that the agglomeration between the particles will occur.

In step (b), the solution (A) containing water-soluble salts of metal M_{A} or other solutions containing transition metal salts are not added. In other words, in the method according to the invention, all transition metals are added in the step of forming the first mixture, i.e. step (a). This means that in step (b), no solution containing salts of transition metal(s) is added.

When all the dissolved metals have been added in step (a) and thus no metal supply/addition is required in step (b), in step (b) the alkali metal hydroxide required when combining with the first mixture to raise the pH of the obtained second mixture to at least 11.5 and/or the alkali metal hydroxide combined with the first mixture until the molar amount of the combined alkali metal hydroxide exceeds the molar amount of the metal MA of the solution (A) combined in step (a), such as 2:1 or more, can be added very rapidly compared to a case where at least part of the solutions containing transition metal salts are added at the same time with the alkali metal hydroxide. Another advantage obtained when no solution containing transition metal salts is added in step (b) is that the amount of transition metal(s) required to increase the particle sizes of the particles provided in the particulate slurry in step (a) to a specific average size to improve the filtration efficiency of the slurry is significantly smaller compared to a case where at least part of the solutions containing transition metal salts are added at the same time with the alkali metal hydroxide. Thus, the operating expenses of the processing of the off-spec material can be kept at low.

In embodiments in which the source of ammonia is provided, in step (a) the slurry, the solution (A) and the source of ammonia can be provided and combined in any order to obtain the first mixture. Alternatively, in step (a) the first mixture is obtained by:
- combining the slurry and the solution (A) before combining the source of ammonia;
- combining the slurry and the source of ammonia before combining the solution (A);
- combining the solution (A) and the source of ammonia before combining the slurry; or
- combining the solution (A), the source of ammonia and the slurry simultaneously.

In an embodiment, in step (a) the NH_{3(aq)} concentration of the first mixture being at most 25 g/l or at most 22 g/l or at most 20 g/l. When the NH3 concentration is higher than this, there is a risk that the precipitation reaction and/or interparticle agglomeration in step (b) will be suppressed and/or dissolved metal residues will be obtained.

In an embodiment, either step (a) or (b) or both are performed at a temperature in the range from 10 to 85 °C, preferably at temperatures in the range from 20 to 70 °C. Steps (a) and (b) can be performed at constant pressure, for example at ambient pressure.

In an embodiment, the temperature of the mixture during step (b) is maintained in the range of from 20 to 50 °C or from 30 to 40 °C. If the reaction temperature rises above this, there is a risk of nucleation of new, small particles.

In an embodiment, Q_{z} is either one or more of Ba, Ca, Ce, Cr, La, Mg, Mo, Nb, Sr, Ti, Y, V, W, Zn, and Al, and Q_{za} is either one or more of Ba, Ca, Ce, Cr, La, Mg, Mo, Nb, Sr, Ti, Y, V, W, Zn, and Al.

Further steps may be performed subsequently to step (b), for example, one or more work-up steps (c). An example of work-up step (c) is to recovery the solid-fraction (i.e., the particles) of the second mixture after step (b) by a solid-liquid separation method, for example filtration.

In such a step (c), the particles from step (b) are separated from the liquid phase by a solid-liquid separation method, preferably by filtration or in a centrifuge. The liquid phase may also be termed mother liquor. Filtration may be performed, e.g., on a belt filter or in a filter press.

In an embodiment, the work-up steps (c) further comprise steps in which the recovered solid fraction is leached and provided in upstream for preparing a metal-bearing particulate slurry.

With the present method and process, it is possible to provide a closed or substantially closed process, in particular with respect to metal-bearing components, which process utilizes all or substantially all of the materials supplied to the process, in particular the metal-bearing material particles supplied and the solid materials obtained from the process. This makes it possible to provide industrial processes that produce less waste. Since all the supplied metals can be used, there is no need to find a disposal site for the waste of off-spec material or to apply for a waste disposal permit. This makes it possible to implement industrial processes of precursor materials and plants with fewer environmental problems, fewer permits, fewer wastewater treatment units or plants, and in a variety of locations.

The present disclosure provides use of a metal-bearing M'-hydroxide or -oxyhydroxide particulate slurry obtained from a co-precipitation process for preparing the metal salt with the method disclosed herein. Preferably the metal salt is for preparing a metal-bearing particulate slurry.

Disclosed is use of the metal salt obtained from the method for manufacturing a metal-bearing particulate slurry.

Modifications of the disclosure will occur to those skilled in the art and to those who make or use the disclosure. Therefore, it is understood that the embodiments described above are merely for illustrative purposes and not intended to limit the scope of the disclosure, which is defined by the following claims, as interpreted according to the principles of patent law, including the doctrine of equivalents.

### EXAMPLES

The present invention is further illustrated in the following examples:

### EXPERIMENTAL TESTS USED IN THE EXAMPLES

The following analysis methods are used in the Examples:

### A) Particle size distribution (PSD) analysis

The PSD is measured using a Malvern Mastersizer 3000 with Hydro MV wet dispersion accessory after dispersing examples as described herein below of positive electrode active material powders in an aqueous medium. To improve the dispersion of the positive electrode active material powder examples, sufficient ultrasonic irradiation and stirring is applied, and an appropriate surfactant is introduced. An average/median particle size D10, D50, and D90 is the value of the particle diameter at 10%, 50% and 90%, respectively, in the cumulative distribution and a span value is a value of (D90-D10)/D50.

### B) NH3(aq) concentration analysis

The NH3(aq) concentration of the example samples was measured by end point titration using an instrument of Metrohm 848 Titrino Plus. A measurement sample was prepared by adding one milliliter of a sample solution, 30-40 ml of deionized water and 1 ml of 1M NaOH to a titration vessel. The measurement sample was titrated to the end point by 0.1M HCl.

### C) pH analysis

pH value of a sample was measured by a 780 Metrohm meter calibrated with pH 7 and pH 13 standards. The sample was cooled to 20°C and the pH was measured from the sample by lowering the pH electrode into the sample and waiting for the pH reading to be leveled.

**Example 1:** An aqueous slurry of nickel hydroxide was processed according to the following steps:
(a) First mixture: 10 m³ of nickel hydroxide containing aqueous slurry, having a solids content of 130 g/l and a median particle size D50 of 2.3 µm, and 2 m³ of 130 g/l aqueous solution of NiSO₄ were combined by mixing in a stirred tank reactor. The mass of the solids content of the slurry was 1300 kg and the mass of the metals (nickel) of the aqueous solution of NiSO₄ was 195 kg, giving their ratio to be 6.7, i.e., Rₐ=(1300kg)/(195kg)≈6.7. Additionally, 210 g/l ammonia water was added to the reactor such that the NH_{3(aq)} concentration of the obtained first mixture was 13.09 g/l.
(b) Second mixture: 425 g/l aqueous solution of sodium hydroxide was supplied to the reactor and combined by mixing with the first mixture from step (a) so as to obtain the second mixture. The supply feed rate of the aqueous solution of sodium hydroxide was 2 m³/h and the amount, respectively, was such that once the feed was stopped the pH value of the obtained second slurry, determined at 20 °C, was 12.17. The molar ratio of the added sodium hydroxide respect to the NiSO₄ added in step 1) was then 1.9:1. During step (b), the temperature inside the reactor was between 30 to 40 °C and continuous mixing of approximately 0.5 kW/m³ of power density was applied to the content.

The D50 value of the obtained second mixture after step (b) was 6.6 µm. Table 1 below summarizes the Examples and Comparative example by reporting the solids content and the D10, D50, D90 and span values of the slurry before processing, i.e., before step (a), the NH3 concentration, pH and Rₐ values of the first mixture, i.e., after step (a), and the D10, D50, D90 and span values of the processed slurry, i.e., after step (b). Table 1 also summarizes the relative D10 and D50 growth.

**Example 2:** Example 2 was conducted similarly with Example 1 except that the nickel hydroxide containing aqueous slurry processed was different, e.g., D50 of the slurry was 1.4 µm, and that in step (a) the amount of the aqueous solution of NiSO₄ added was 1.5 m³, giving the Rₐ value of the first slurry to be thus 5.0, and that the NH₃ concentration of the first mixture from step (b) was 18.29 g/l. Otherwise the Example 2 was conducted similarly as described for Example 1.

**Example 3:** Example 3 was conducted similarly with Example 1 except that the nickel hydroxide containing aqueous slurry processed was different, e.g., D50 of the slurry was 1.3 µm, and that in step 1) the amount of the aqueous solution of NiSO₄ added was 2 m³, giving the Rₐ value of the first slurry to be thus 4.0, and that the NH₃ concentration of the first mixture from step (b) was 19.99 g/l. Otherwise the Example 3 was conducted similarly as described for Example 1.

**Example 4:** Example 4 was conducted similarly with Example 1 except that the nickel hydroxide containing aqueous slurry processed was different, e.g., D50 of the slurry was 1.2 µm, and that in step 1) the amount of the aqueous solution of NiSO₄ added was 2 m³, giving the Rₐ value of the first slurry to be thus 4.0, and that the NH₃ concentration of the first mixture from step (b) was 17.30 g/l. Otherwise the Example 4 was conducted similarly as described for Example 1.

**Example 5:** Example 5 was conducted similarly with Example 1 except that the nickel hydroxide containing aqueous slurry processed was different, e.g., D50 of the slurry was 1.9 µm and the solids content was 144 g/l, and that in step 1) the amount of the aqueous solution of NiSO₄ added was 3.0 m³, giving the Rₐ value of the first slurry to be thus 4.7, and that the NH₃ concentration of the first mixture from step (b) was 15.03 g/l. Otherwise the Example 2 was conducted similarly as described for Example 1.

Figure 1(A) shows a SEM image of the nickel hydroxide-containing aqueous slurry used as the raw material in Example 5, and Figure 1(B) shows a SEM image of the second mixture obtained from Example 5.

**Comparative Example 1:** Comparative Example 1 was conducted similarly with Example 1 except that the nickel hydroxide containing aqueous slurry processed was different, e.g., D50 of the slurry was 2.7 µm, and that in step 1) the amount of the aqueous solution of NiSO₄ added was 0.75 m³, giving the Rₐ value of the first slurry to be thus 13.3, and that the NH₃ concentration of the first mixture from step (b) was 19.90 g/l. Otherwise the Comparative Example 1 was conducted similarly as described for Example 1.

### Filtering experiments:

An improved solid-liquid separation efficiency is demonstrated by Figures 2(A) and 2(B), where Figure 2(A) shows the press filtration for the nickel hydroxide-containing aqueous slurry used as the raw material in Example 5, and Figure 2(B) shows the press filtration for the second mixture obtained from Example 5. In Figures 2(A) and 2(B), due to the grey scale used, ◇ is used to denote the graph of the filtration step (in units of s), □ is used to denote the graph of the filtration pressure applied (in units of bar), and ∘ is used to denote the graph of the weight of the recovered filter cake (in units of kg), respectively. The x-axis in the figures is the filtration time (in units of h). Using the same pressure filter device (Oberlin) and setup, the average recovery rate for filtering the raw material (i.e., Figure 2(A)) was 29.5 kg/h and the average recovery rate for filtering the second mixture (i.e., Figure 2(B)) was 97.4 kg/h. As shown in the figures, in contrast to the filtration of the raw material (Figure 2(A)), in the filtration of the second mixture (Figure 2(B)), the filtration pressure graph retains its shape and magnitude as well as the filter cake weight graph increases linearly in steps as the filtration steps evolve, implying the efficient and smooth filtration of the second mixture. On the other hand, when the raw material is filtered, as shown in Figure 2(A), the filter cake is much smaller and the air does not pass through the filter cake, resulting in inefficient and time-consuming filtration.

**Table 1: The solids content and the D10, D50, D90 values of the slurry before processing (i.e., before steps (a)), the NH3 concentration, pH and Rₐ values of the first mixture (i.e., after step (a)), and the D10, D50, D90 and span values of the processed slurry (i.e., after step (b))**

| | Slurry solids content [g/l] | Particle size before processing | | | | Step (a) / first mixture | | | Step (b) / second mixture | Particle size after processing | | | | | |
|---|---|---|---|---|---|---|---|---|---|---|---|---|---|---|---|
| | | D10 [µm] | D50 [µm] | D90 [µm] | span [µm] | NH₃ [g/l] | pH | Rₐ | pH | D10 [µm] | D50 [µm] | D90 [µm] | span [µm] | Relati ve D10 growt h [%] | Relati ve D50 growt h [%] |
| Ex1 | 130 | 0.8 | 2.3 | 4.2 | 1.51 | 13.09 | 10.28 | 6.7 | 12.17 | 3.2 | 6.6 | 10.7 | 1.13 | 300.0 | 187.0 |
| Ex2 | 130 | 0.6 | 1.4 | 2.5 | 1.36 | 18.29 | 8.79 | 5.0 | 12.32 | 4.8 | 8.1 | 12.1 | 0.91 | 700.0 | 478.6 |
| Ex3 | 130 | 0.6 | 1.3 | 2.5 | 1.42 | 19.99 | 8.32 | 4.0 | 11.74 | 1.2 | 5.5 | 24.2 | 4.17 | 100.0 | 323.1 |
| Ex4 | 130 | 0.6 | 1.2 | 2.3 | 1.45 | 17.30 | 8.14 | 4.0 | 12.20 | 1.7 | 3.7 | 5.7 | 1.07 | 183.3 | 208.3 |
| Ex5 | 144 | 0.8 | 1.9 | 4.4 | 1.92 | 15.03 | 9.7 | 4.7 | 12.19 | 2.1 | 4.5 | 7.1 | 1.10 | 162.5 | 136.8 |
| CEx1 | 130 | 0.9 | 2.7 | 4.5 | 1.30 | 19.90 | 11.5 | 13.3 | 12.60 | 1.0 | 3.3 | 5.6 | 1.38 | 11.1 | 22.2 |

## Claims

1. A method of processing a metal-bearing M'-hydroxide or -oxyhydroxide particulate slurry, having a median particle size D50 of equal to or less than 3 µm, the method comprising the steps of:
(a) combining the slurry and an aqueous solution (A) containing water soluble salts of metal M_{A} such that Rₐ≤10 to obtain a first mixture and providing the NH3_{(aq)} concentration of the first mixture being at least 10 g/l, wherein Rₐ is a ratio of the mass of the solids content of the slurry to the mass of the metals M_{A} of the solution (A); and
(b) combining the first mixture with alkali metal hydroxide until a second mixture having a pH value of at least 11.5, determined at 20 °C, is obtained,
wherein the M'=Ni_{1-x-y-z}MnₓCo_{y}Q_{z} with 0≤x≤0.85, 0≤y≤0.35, 0≤z<0.1 and 0.25≤1-x-y-z≤1, and
wherein the M_{A}=Ni_{1-xa-ya-za}MnₓₐCo_{ya}Q_{za} with 0≤xa≤0.85, 0≤ya≤0.35, 0≤za<0.1 and 0.25≤1-xa-ya-za≤1.

2. The method of claim 1, wherein in step (a) Rₐ≤7.

3. The method of claim 1 or 2, wherein in step (a) Rₐ≥3 or Rₐ≥4.

4. The method of any of the preceding claims, wherein the pH of the obtained second mixture is equal to or less than 12.5.

5. The method of any of the preceding claims, wherein step (a) comprises providing a source of ammonia (NH₃) to the first mixture.

6. The method of claim 5, wherein in step (a) the slurry, the solution (A) and the source of ammonia are provided and combined in any order to obtain the first mixture, optionally the first mixture is obtained by:
- combining the slurry and the solution (A) before combining the source of ammonia;
- combining the slurry and the source of ammonia before combining the solution (A);
- combining the solution (A) and the source of ammonia before combining the slurry; or
- combining the solution (A), the source of ammonia and the slurry simultaneously.

7. The method of any of the preceding claims, wherein in step (a) the NH3(aq) concentration of the first mixture of at least 12 g/l or at least 13 g/l is being provided.

8. The method of any of the preceding claims, wherein in step (a) the NH3(aq) concentration of the first mixture of at most 25 g/l is being provided.

9. The method of any of the preceding claims, wherein the alkali metal hydroxide being provided as a solution containing alkali metal hydroxide.

10. The method of any of the preceding claims, wherein the D50 of the slurry provided to the first mixture being equal to or less than 2.5 µm.

11. The method of any of the preceding claims, wherein Q_{z} is either one or more of Ba, Ca, Ce, Cr, La, Mg, Mo, Nb, Sr, Ti, Y, V, W, Zn, and Al, and wherein Q_{za} is either one or more of Ba, Ca, Ce, Cr, La, Mg, Mo, Nb, Sr, Ti, Y, V, W, Zn, and Al.

12. The method of any of the preceding claims, comprising a further step (c), in which a solid fraction of the second mixture is recovered, for example, by filtering the second mixture.

13. The method of claim 12, wherein the recovered solid fraction is leached, followed by providing the leached solid fraction in upstream for preparing a metal-bearing particulate slurry.

14. The method of any of the preceding claims, wherein 1-xa-ya-za=1 and/or 1-x-y-z=1.

15. The method of any of the preceding claims, wherein the temperature of the mixture during step (b) is maintained in the range of from 20 to 50 °C or from 30 to 40 °C.
